# EUROPEAN PATENT APPLICATION

(11) **EP 4 258 222 A1**
(43) Date of publication of application: **11.10.2023**
(21) Application number: 21899856.5
(22) Date of filing: 17.11.2021
(51) Int. Cl.: G06T 19/00

(54) **DATA PROCESSING METHOD AND APPARATUS FOR IMMERSIVE MEDIA, AND COMPUTER-READABLE STORAGE MEDIUM**

(30) Priority: 02.12.2020 CN 202011399700
(71) Applicant: Tencent Technology (Shenzhen) Company Limited, Shenzhen, Guangdong, 518057 (CN)
(72) Inventor: HU, Ying, Shenzhen, Guangdong 518057 (CN)
(74) Representative: Eisenführ Speiser
(86) International application number: PCT/CN2021/131108
(87) International publication number: WO 2022/116822

(57) **Abstract**

A data processing method and apparatus for an immersive media file, and a computer-readable storage medium, which can enrich the presentation form of immersive media. The method comprises: acquiring a recommendation window data box of an immersive media file, the recommendation window data box being used for defining switching information of a view point of the immersive media file and switching information of a recommendation window (S301); according to the switching information of the current view point and the switching information of the current recommendation window, determining a target view point and a target recommendation window (S302); and switching to the target view point and the target recommendation window for presentation of the immersive media file (S303).

## Description

This application claims priority to Chinese Patent Application No. 202011399700.4, entitled "METHOD AND APPARATUS FOR PROCESSING DATA OF IMMERSIVE MEDIA, AND COMPUTER-READABLE STORAGE MEDIUM" filed with the China National Intellectual Property Administration on December 02, 2020, which is incorporated herein by reference in its entirety.

### FIELD OF THE TECHNOLOGY

The present disclosure relates to the field of computer technologies, and more specifically to data processing for immersive media.

### BACKGROUND OF THE DISCLOSURE

Content of immersive media is typically divided into multiple samples (e.g., image frames or video frames), which are encapsulated in track groups according to their association. The association refers to that the samples in all track groups correspond to the same viewpoint, the samples in one track group correspond to one viewpoint, or the samples in one track group correspond to different viewpoints. The samples in one track group can only be presented based on a certain temporal order.

Such association puts some limitations on encapsulation flexibility of the immersive media, and hence limits flexibility of a form for presenting the immersive media. How to enrich presentation forms of the immersive media is an urgent issue.

### SUMMARY

A method and an apparatus for processing data of immersive media and a computer-readable storage medium are provided according to embodiments of the present disclosure. Presentation forms of the immersive media are enriched.

In a first aspect, a method for processing data of immersive media is provided. The method is executable by a media playback device, and comprises: obtaining a recommended viewport box of an immersive media file, where the recommended viewport box is configured to define switching information of a viewpoint and switching information of a recommended viewport of the immersive media file; determining a destination viewpoint and a destination recommended viewport indicated by the switching information of a current viewpoint and the switching information of a current recommended viewport; and switching to the destination viewpoint and the destination recommended viewport when presenting the immersive media file.

In a second aspect, another method for processing data of immersive media is provided. The method is executable by a media production device, and comprises: obtaining viewpoint information and viewport information for presenting an immersive media file; and constructing a recommended viewport box according to the viewpoint information and the viewport information, where the recommended viewport box is configured to define switching information of a viewpoint and switching information of a recommended viewport of the immersive media file.

In a third aspect, an apparatus for processing data of immersive media is provided. The apparatus is deployable in a media playback device, and comprises: an obtaining unit, configured to obtain a recommended viewport box of an immersive media file, where the recommended viewport box is configured to define switching information of a viewpoint and switching information of a recommended viewport of the immersive media file; a determining unit, configured to determine a destination viewpoint and a destination recommended viewport indicated by the switching information of a current viewpoint and the switching information of a current recommended viewport; and a presenting unit, configured to switch to the destination viewpoint and the destination recommended viewport when presenting the immersive media file.

In a fourth aspect, another apparatus for processing data of immersive media is provided. The apparatus is deployable in a media production device, and comprises: an obtaining unit, configured to obtain viewpoint information and viewport information for presenting an immersive media file; and a encapsulating unit, configured to construct a recommended viewport box according to the viewpoint information and the viewport information, where the recommended viewport box is configured to define switching information of a viewpoint and switching information of a recommended viewport of the immersive media file.

In a fifth aspect, a computer device is provided, comprising a processor and a memory. The memory is configured to store a computer program, and the processor is configured to invoke and execute the computer program stored in the memory to perform the method according to the first aspect or implementations of the first aspect.

In a sixth aspect, a computer device is provided, comprising a processor and a memory. The memory is configured to store a computer program, and the processor is configured to invoke and execute the computer program stored in the memory to perform the method according to the second aspect or implementations of the second aspect.

In a seventh aspect, a computer-readable storage medium storing a computer program is provided. The computer program enables a computer to perform the method according to any of the first aspect and the second aspect or implementations of such aspect.

In an eighth aspect, a computer program product comprising computer program instructions are provided. The computer program instructions enable a computer to perform the method according to any of the first aspect and the second aspect or implementations of such aspect.

In a ninth aspect, a computer program is provided. The program when executed on a computer configures the computer to perform the method according to any of the first aspect and the second aspect or implementations of such aspect.

Through the above technical solutions, the media production device can construct the recommended viewport box of the immersive media according to the viewpoint information and the viewport information of the immersive media. Further, the media playback device can determine the destination viewpoint and the destination recommended viewport according to the switching information of the current viewpoint and the switching information of the current recommended viewport, which are defined in the recommended viewport box, and thereby switch to the destination viewpoint and the destination recommended viewport when presenting the immersive media file. Hence, when switching the viewpoint and/or the recommended viewport, a manner of the switching can be flexibly determined based on the switching information of the viewpoint and the switching information of the recommended viewport defined in the recommended viewport box. Presentation forms are diversified at the media playback device side, which enriches applications of immersive media and improves users' experience.

### BRIEF DESCRIPTION OF THE DRAWINGS

Figure 1 is an architectural diagram of an immersive media system according to an embodiment of the present disclosure.
Figure 2 is a flowchart of transmission of immersive media according to an embodiment of the present disclosure.
Figure 3 is a schematic flowchart of a method for processing data of immersive media according to an embodiment of the present disclosure.
Figure 4 is a schematic flowchart of a method for processing data of immersive media according to another embodiment of the present disclosure.
Figure 5 is a schematic structural diagram of an apparatus for processing data of immersive media according to an embodiment of the present disclosure.
Figure 6 is a schematic structural diagram of an apparatus for processing data of immersive media according to another embodiment of the present disclosure.
Figure 7 is a schematic structural diagram of a media production device according to an embodiment of the present disclosure.
Figure 8 is a schematic structural diagram of a media playback device according to an embodiment of the present disclosure.

### DESCRIPTION OF EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Embodiments of the present disclosure relate to data processing technology for immersive media. The immersive media refers to media files which can provide immersive media content and thereby enable users immersed in the media content to acquire realistic experiences in, for example, visual and acoustic senses. Generally, the immersive media may be 3-degree-of-freedom (3DoF) immersive media, 3DoF+ immersive media, or 6-degree-of-freedom (6DoF) immersive media. The immersive media content includes video content presented in various forms within a three-dimensional (3D) space, for example, may be 3D video content of a spherical form. The immersive media content may be virtual reality (VR) video content, panoramic video content, spherical video content, or 360-degree video content. Accordingly, the immersive media may be called a VR video, a panoramic video, a spherical video, or a 360-degree video. In addition, the immersive media content may further comprise audio content that is synchronous with the video content presented within the 3D space.

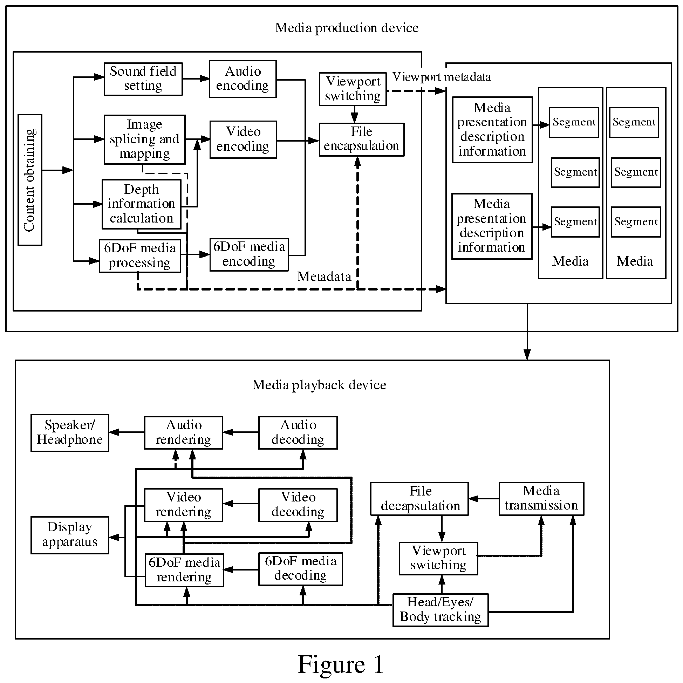

Figure 1 shows an architectural diagram of an immersive media system according to an embodiment of the present disclosure. As shown in Figure 1, the immersive media system comprises a media production device and a media playback device (or media consumption device). The media production device may refer to a computer device used by a provider of the immersive media (e.g., a media producer of the immersive media). Such computer device may be a terminal (e.g., a personal computer (PC), a smart mobile device such as a smart phone) or a server. The media playback device may refer to a computer device used by a consumer (e.g., a user) of the immersive media. Such computer device may be a terminal (e.g., a PC, a smart mobile device such as a smart phone), a VR device (e.g., a VR helmet, and VR glasses). Processing data of the immersive media includes a process of data processing at a media production device side and a process of data processing at a media playback device side.

The process of data processing at the media production device side mainly comprises: (1) obtaining and producing the media content of the immersive media, and (2) encoding the immersive media and encapsulating the immersive data as a file. The process of data processing process at the media playback device side mainly comprises: (3) decapsulating the file and decoding the immersive media, and (4) rendering the immersive media. In addition, the immersive media is transmitted between the media production device and the media playback device. The transmission may be implemented based on various transmission protocols. Herein the protocols may include, but are not limited to, Dynamic Adaptive Streaming over HTTP (DASH) protocol, HTTP Live Streaming (HLS) protocol, Smart Media Transport Protocol (SMTP), Transmission Control Protocol (TCP), or the like.

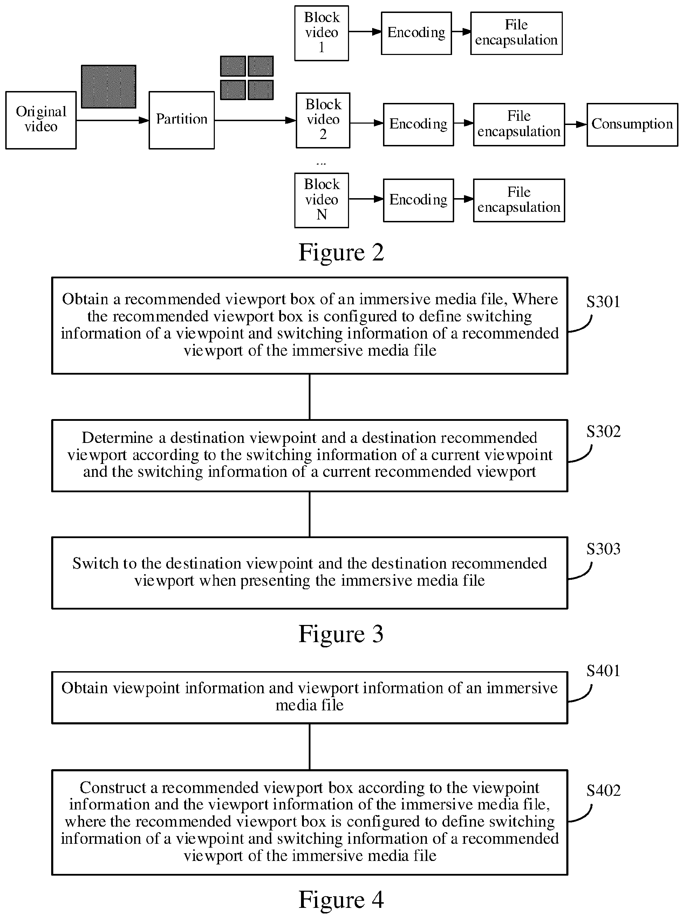

Figure 2 shows a flow of transmission of immersive media according to an embodiment of the present disclosure. As shown in Figure 2, when processing the immersive media, an original video is usually spatially partitioned into multiple block videos (e.g., block video 1, block video 2, ..., and block video N), and each block is separately encoded, encapsulated as a file, and then transmitted to a client for consumption. Thereby, a burden on a transmission bandwidth due to a large amount of data in the immersive media is levitated.

Hereinafter reference is made to both Figure 1 and Figure 2 to illustrate each process in processing the data of the immersive media.

### I. Process of data processing at the media production device side

A. The media content of the immersive media is obtained (i.e., content obtaining as shown in Figure 1).

The media content of the immersive media may be obtained in two manners, i.e., realistic visual-acoustic scenes are acquired by a capturing device or generated by a computer. In one embodiment, the capturing device refers to a hardware component in the media production device. For example, the capturing device may be a microphone, a camera, a sensor, or the like of a terminal. In another embodiment, the capturing device may be a hardware apparatus connected to the media production device, such as a camera connected to a server, which is configured to provide a service of acquiring the media content of the immersive media for the media production device. The capturing device may include, but is not limited to, an audio device, a camera device, or a sensing device. The audio device may include an audio sensor, a microphone, or the like. The camera device may include an ordinary camera, a stereo camera, a light field camera, or the like. The sensing device may include a laser device, a radar device, or the like. There may be multiple capturing devices. These capturing devices are deployed at designated locations in the real world, so as to capture audio content and video content from different perspectives within a space simultaneously. The captured audio content and the captured video content are synchronous both temporally and spatially. Different obtaining manners may lead to different manners of compressing and/or encoding the media content.

B. The media content of the immersive media is processed.

The captured audio content itself is suitable for audio encoding of the immersive media, while the captured video content should be subject to a series of processing before being suitable for video encoding of the immersive media. The processing includes splicing and projection.

Since the captured video content is collected from different perspectives through the capturing devices, the splicing refers to putting the video content (images) captured from the different perspectives together to form a complete video that can reflect 360-degree visual panorama of the space in the real world. That is, a panoramic video (or a spherical video) presented in a 3D space is obtained after the splicing.

The projection refers to mapping the 3D video, which is generated by the splicing, to a two-dimensional (2D) image. The 2D image generated by the projection is called a projection image. A manner of the projection may include, but is not limited to, longitude-latitude projection and cubic projection.

C. The media content of the immersive media is encoded (which includes audio encoding, video encoding, and 6DoF media encoding on content subject to 6DoF media processing).

The projection image may be directly encoded, or may be encoded after being subject to regional encapsulation (encapsulation based on regions). In current mainstream video encoding techniques, such as international video encoding standards High Efficiency Video Coding (HEVC) and Versatile Video Coding (VVC) and China national video encoding standard Audio Video Coding Standard (AVS), a hybrid encoding framework is adopted to perform following operations and processing on an original video signal that is inputted: block partition structure, predictive coding, transform & quantization, entropy coding or statistical coding, loop Filtering, and the like.

D. The immersive media is subject to encapsulation.

An audio bitstream and a video bitstream are encapsulated in a file container according to a file format of the immersive media (such as ISO Base Media File Format (ISOBMF)), so as to generate a media file resource of the immersive media. The media file resource may be a media file of the immersive media, or media fragments for forming the media file. Metadata of the media file resource of the immersive media is recorded in media presentation description (MPD) according to a requirement of a file format of the immersive media. Herein the metadata is a generic term for information related to presentation of the immersive media. The metadata may include information describing the media content, information describing a viewport, signaling related to the presentation of the media content, and the like. As shown in Figure 1, the media production device stores the MPD information and the media file resource generated through the data processing.

A sample refers to a unit of the media file during the encapsulation. One media file comprises multiple samples. For example, one video frame serves typically as one sample of the video media.

### II. Process of data processing at the media playback device side

A. The file of the immersive media is decapsulated and decoded (where the decoding mainly includes audio decoding, video decoding, and 6DoF media decoding).

The media playback device may obtain the media file resource of the immersive media and the corresponding MPD adaptively and dynamically from the media production device according to recommendation of the media production device or according to user requirements at the media playback device side. For example, the media playback device may determine an orientation and a position concerning a user according to tracking information of the user's head/eyes/body, and then request the corresponding media file resource from the media production device dynamically based on the orientation and location. The media file resource and the MPD information are transmitted from media production device to the media playback device (i.e., the media transmission) through a transmission mechanism (such as the DASH, the SMT). The file decapsulation at the media playback device side is an inverse process of the file encapsulation process at the media production device side. The media playback device decapsulates the media file resource according to the requirement of the file format of the immersive media, so as to obtain the audio bitstream and the video bitstream. The decoding at the media playback device side is an inverse process of the encoding at the media production device side. The media playback device decodes the audio bitstream to restore the audio content. The media playback device decodes the video bitstream through following steps. The video bitstream is decoded to obtain a planar projection image, and the projection image is converted into a 3D image through reconstruction based on the MPD information. Herein the reconstruction refers to a process of projecting the 2D projection image into the 3D space.

### (2) The immersive media is rendered.

The media playback device renders the audio content obtained through the audio decoding and the 3D image obtained through the video decoding according to the metadata, which is related to rendering, viewpoint(s), and viewport(s), in the MPD information. Playback and output of the 3D image is achieved when the rendering is finished. As an example, the audio content is outputted through a speaker/earphone, and the 3D image is displayed through a display device. The viewpoint may refer to immersive media content which is acquired by a corresponding device when producing the immersive media. The viewport may refer to a part of the immersive media content which is viewed by a user when presenting the immersive media.

The immersive media system supports boxes (data boxes). The box refers to a data block or an object that comprises the metadata. That is, the box comprises the metadata of corresponding media content. The metadata of a viewport is recorded in a recommended viewport box (RcvpInfoBox). Syntax of the recommended viewport box (RcvpInfoBox) for the immersive media may refer to Table 1.

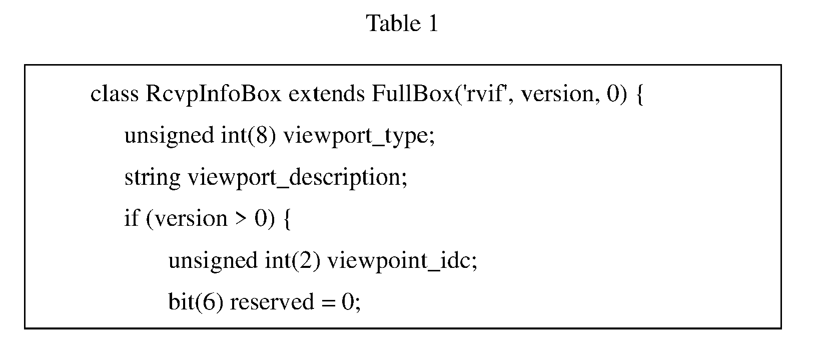

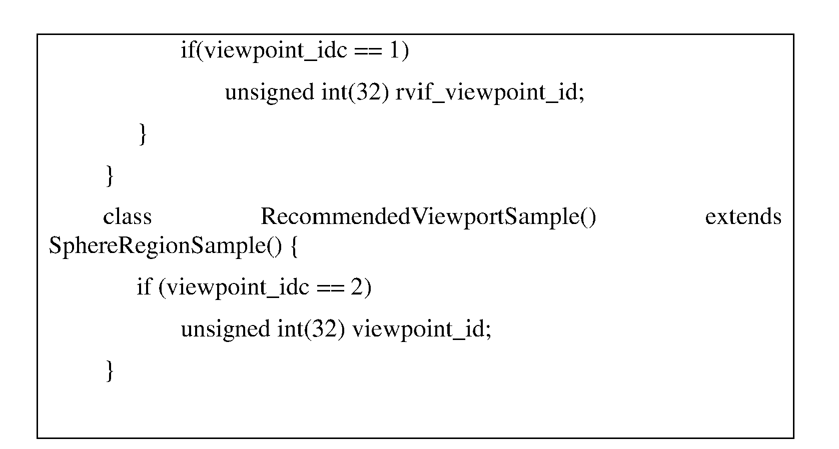

Semantics of the syntax as shown in the Table 1 are as follows.
viewport_type signals a type of a recommended viewport. viewport_type equal to 0 indicates that the recommended viewport is from a clip made by a media producer, and viewport_type equal to 1 indicates that the recommended viewport is determined based on statistics of big data.
viewport_description signals description information of the recommended viewport. The description information is an eight-bit (UTF-8) string ended with a null character.
viewpoint_idc equal to 0 indicates that all media tracks associated with a current media track belong to the same viewpoint. viewpoint_idc equal to 1 indicates that an identifier (ID) of a viewpoint associated with an entry of a current recommended track is determined according to rvif_viewpoint_id. viewpoint_idc equal to 2 indicates that a part of samples in the media track correspond to a particular viewpoint.
rvif_viewpoint_id signals an ID of a viewpoint to which all samples corresponding to a sample entry belong.
viewpoint_id signals an ID of a viewpoint to which a sample belongs.

Herein a track refers to a series of samples which have temporal attributes and are encapsulated in the ISO base media file format (ISOBMFF), such as a video track. The video track is obtained by encapsulating a bitstream, which is generated through a video encoder encoding each frame, according to the ISOBMFF specification. One track may correspond to one entry, which is also called the sample entry.

It can be seen from the above semantics that in RcvpInfoBox, the viewpoint_idc equal to 1 indicates that one viewpoint corresponds to one recommended viewport, i.e., different viewpoints have different recommended viewports, and the viewpoint_idc equal to 2 indicates that one recommended viewport may change among multiple viewpoints, i.e., one recommended viewport may correspond to multiple viewpoints. In other words, in the above two cases, the viewpoint is changed along with the recommended viewport, which cannot provide flexible switching on viewpoints and viewports for users.

In view of the above, a method for processing data of immersive media is provided according to embodiments of the present disclosure. Switching information of a viewpoint and of a recommended viewport may be encapsulated in the recommended viewport box, and thereby the media playback device can switch the viewpoint and the recommended viewport flexibly according to the switching information of the viewpoint and of the recommended viewport. Hence, thereby the users' experience is improved.

Figure 3 is a schematic flowchart of a method for processing data of immersive media according to an embodiment of the present disclosure. This method may be executed by a media playback device (also called media consumption device) in an immersive media system. The media consumption device may be a device having a capability of encoding and/or decoding point-cloud media, for example, a server, a drone, and a handheld terminal, which is not limited herein.

As shown in Figure 3, the method may comprise at least a part of following steps S301 to S303.

In step S301, a recommended viewport box of an immersive media file is obtained. The recommended viewport box is configured to define switching information of a viewpoint and switching information of a recommended viewport of the immersive media file.

In step S302, a destination viewpoint and a destination recommended viewport are determined according to the switching information of a current viewpoint and the switching information of a current recommended viewport.

In step S303, the current view point and the current recommended viewport are switched to the destination viewpoint and the destination recommended viewport, respectively, when presenting the immersive media file.

In some embodiments, the media consumption device selects browsing the immersive media in a recommended browsing mode. In such case, the media consumption device switches the viewpoint and the viewport according to corresponding content in the recommended viewport box.

The recommended browsing mode may refer to browsing each sample of an immersive media by using a recommended viewport (such as a viewport recommended by a director or a content producer).

In some embodiments, the recommended viewport box comprises a viewpoint switching field.

The viewpoint switching field (e.g., viewpoint_switch) is configured to indicate whether the current viewpoint is to be switched to another viewpoint after a specific recommended viewport corresponding to the current viewpoint is presented. The current viewpoint corresponds to at least one recommended viewport.

For example, the viewpoint switching field equal to 1 signals that the current viewpoint is to be switched to another viewpoint after the specific recommended viewport corresponding to the current viewpoint is presented. The viewpoint switching field equal to 0 signals that the current viewpoint is not to be switched to another viewpoint after the specific recommended viewport corresponding to the current viewpoint is presented.

Therefore, in an embodiment, it is determined according to the viewpoint switching field whether the current viewpoint needs to be switched to another viewpoint after the specific recommended viewport corresponding to the current viewpoint is presented. The process proceeds to the step S302 in case of positive determination.

In some embodiments, the recommended viewport box comprises a destination viewpoint field and a destination recommended viewport field.

The destination viewpoint field (e.g., des_viewpoint_id) is configured to signal the destination viewpoint to which the current viewpoint is switched after the current recommended viewport is presented.

The destination recommended viewport field (e.g., des_viewport_id) is configured to signal the destination recommended viewport to which the current recommended viewport is switched after the current recommended viewport is presented and the current viewpoint is switched to the destination viewpoint.

In some embodiments, in a case that the viewpoint switching field indicates that the current viewpoint needs to be switched to another viewpoint, the destination viewpoint and the destination recommended viewport are determined according to the destination viewpoint field and the destination recommended viewport field, respectively. In such case, the destination viewpoint field represents the switching information of the current viewpoint, and the destination recommended viewport field represents the switching information of the current recommended viewport.

In some embodiments, a value of the destination viewpoint field is an identifier of the destination viewpoint.

In some embodiments, a value of the destination recommended viewport field is an identifier of the destination recommended viewport.

In some embodiments, the recommended viewport box comprises an independent viewport field. The independent viewport field (e.g., independent_viewport) is configured to indicate whether each viewpoint corresponds to a respective independent group of recommended viewports.

As an example, the independent viewport field having a first value, for example, equal to 1, signals that each viewpoint corresponds to a respective independent group of recommended viewports. In other words, each group of recommended viewports corresponds to a respective viewpoint, that is, the groups of recommended viewports and the viewpoints are in one-to-one correspondence.

The respective viewpoint corresponding to each group of recommended viewports is determined according to a viewpoint identifier (ID) field in a sample entry of such group of recommended viewports.

As another example, the independent viewport field having a second value, for example, equal to 0, signals that each viewpoint corresponds to the same group of recommended viewports. In such case, there is only entry of the recommended viewports, and all viewpoints correspond to such entry.

In other words, the independent viewport field equal to 1 indicates that each group of recommended viewports (i.e., one recommended viewport entry) corresponds to content for only one viewpoint. The independent viewport field equal to 0 indicates that there is only one group of recommended viewports which corresponds to content for all viewpoints.

In conventional technology, viewpoint information in the recommended viewport box only comprises labels of the viewpoints. In a case that one viewpoint comprises multiple pieces of media content, diversified presentation of the viewpoint cannot be implemented.

In view of the above, an encapsulation file of the immersive media may further comprise a viewpoint entity-group box. The viewpoint entity-group box (e.g, ViewpointEntityGroupBox) is configured to record a label of each entity that forms a part of a viewpoint.

An entity that forms a part of a viewpoint may refer to a media component of a certain type, for example, may be a video, an audio, or a background audio, which is not limited herein.

Thereby, when switching to a certain viewpoint, the media consumption device may obtain the label of each entity for the viewpoint and render each entity for the viewpoint, which facilitates diversified presentation of the viewpoint.

In an embodiment, the recommended viewport box and the viewpoint entity-group box may be implemented by extending an ISOBMFF box.

As an example, the recommended video box may comprise a viewpoint information box (e.g., AssoRcViewpointInfoBox) as shown in Table 2 and a recommended viewport sample box (e.g., RecommendedViewportSample) as shown in Table 3. The viewpoint information box and the recommended viewport sample box are configured to define the foregoing fields, respectively.

**Table 2**

| |
|---|
| ```
 class AssoRcViewpointInfoBox extends FullBox('avpo', 0, 0) {
 unsigned int(1) independent_viewport;
 unsigned int(1) viewpoint_switch;
 bit(6) reserved;
 if(independent_viewport){
 unsigned int(32) viewpoint_id;
 }
 }
``` |

**Table 3**

| |
|---|
| ```
 class RecommendedViewportSample() extends SphereRegionSample() {
 unsigned int(32) viewport_id;
 if (viewpoint_switch){
 unsigned int(32) des_viewpoint_id;
 unsigned int(32) des_viewpoint_id;
 }
 }
``` |

The definition of each field in Table 2 and Table 3 may refer to the foregoing description.

As an example, the viewpoint entity-group box may be constructed in a manner as shown in Table 4.

**Table 4**

| |
|---|
| ```
 aligned(8) class ViewpointEntityGroupBox extends EntityToGroupBox('vipo',0,0) {
 string viewpoint_label;
 unsigned int(32) group_id;
 unsigned int(32) num_entities_in_group;
 for(i=0; i<num_entities_in_group; i++){
 unsigned int(32) entity_id;
 string viewpoint_entity_label;
 }
 }
``` |

Semantics of syntax as shown in Table 4 are as follows.
viewpoint_label signals label information of a viewpoint, for example, may be a string ended with a null character.
group_id signals a group ID of a current entity group.
num entities in_group signals a quantity of entities in the current entity group.
entity_id signals an ID of an entity, and the ID may correspond to a track ID or an item ID.
viewpoint_entity_label signals a label of each entity that forms a part the current viewpoint, for example, may be a string ended with a null character.

The encapsulation manners as shown in Table 2, Table 3, and Table 4 are only exemplary. In other embodiments, the forgoing fields may be encapsulated in other manners, which is not limited herein.

In addition, the recommended viewport box further comprises a recommended viewport description field. The recommended viewport description field is configured to signal description information of a recommended viewport (e.g., a first type of the recommended viewport is recommended by author XX). This description information is an eight-bit (UTF-8) string ended with a null character.

In some embodiments, S301 may specifically comprise following steps.

An encapsulation file of the immersive media file is obtained from a media production device. The encapsulation file of the immersive media file is decapsulated to obtain the recommended viewport box of the immersive media file.

The transmission and the decapsulation of the encapsulation file of the immersive media may refer to the foregoing description concerning Figure 1 and Figure 2, and are not repeated herein.

Therefore, in embodiments of the present disclosure, the media consumption device obtains the encapsulation file of the immersive media from the media production device, and decapsulates the encapsulation file of the immersive media to obtain the recommended viewport box of the immersive media. The recommended viewport box configured to define the switching information of the viewpoint and the switching information of the recommended viewport of the immersive media. The media consumption device may further determine the destination viewpoint and the destination recommended viewport according to the switching information of the current viewpoint and the switching information of the current recommended viewport which are defined in the recommended viewport box, and then switch to the destination viewpoint and the destination recommended viewport when presenting the immersive media file. Thereby, when switching the viewpoint and the recommended viewport, a manner of the switching can be flexibly determined according to the switching information of the viewpoint and the switching information of the recommended viewport defined in the recommended viewport box. The presentation forms of the immersive media are more diversified, and the users' experience is improved.

Figure 4 is a schematic flowchart of a method for processing data of immersive media according to an embodiment of the present disclosure. This method may be executed by a media production device in an immersive media system. The media production device may be a device having a capability of encoding and/or decoding a point-cloud media, for example, may be a server, a drone, and a handheld terminal, which is not limited herein.

As shown in Figure 4, the method may include at least a part of following steps S401 to S402.

In step S401, viewpoint information and viewport information in an immersive media file are obtained.

In step S402, a recommended viewport box is constructed (through encapsulation) according to the viewpoint information and the viewport information in the immersive media file. The recommended viewport box is configured to define switching information of a viewpoint and switching information of the recommended viewport of the immersive media file.

In some embodiments, the method further comprises following steps.

The recommended viewport box is encapsulated into an encapsulation file of the immersive media file, and the encapsulation file of the immersive media file is transmitted to a media playback device.

The production and the encapsulation of the immersive media may refer to the forgoing description concerning Figure 1 and Figure 2, which is not repeated herein for brevity.

In some embodiments, the recommended viewport box comprises a viewpoint switching field.

The viewpoint switching field is configured to indicate whether a current viewpoint is to be switched to another viewpoint after a specific recommended viewport corresponding to the current viewpoint is presented. The current viewpoint corresponds to at least one recommended viewport.

In some embodiments, the recommended viewport box comprises a destination viewpoint field and a destination recommended viewport field.

The destination viewpoint field is configured to signal the destination viewpoint to which the current viewpoint is switched after the current recommended viewport is presented.

The destination recommended viewport field is configured to signal the destination recommended viewport to which the current recommended viewport is switched after the current recommended viewport is presented and the current viewpoint is switched to the destination viewpoint.

In some embodiments, the recommended viewport box comprises an independent viewport field. The independent viewport field is configured to indicate whether each viewpoint corresponds to a respective independent group of recommended viewports.

In some embodiments, the independent viewport field having a first value indicates that each viewpoint corresponds to a respective independent group of recommended viewports. The independent viewport field having a second value indicates that each viewpoint corresponds to a same group of recommended viewports.

In some embodiments, the recommended viewport box further comprises a viewpoint entity-group box. The viewpoint entity-group box is configured to record a label of each entity that forms a part of a viewpoint.

Therefore, in embodiments of the present disclosure, the media production device can construct the recommended viewport box according to the viewpoint information and the viewport information of the immersive media, encapsulates the recommended viewport box into the encapsulation file of the immersive media, and then transmits the encapsulation file of the immersive media to the media consumption device. Thereby, the media consumption device decapsulates the encapsulation file of the immersive media to obtain the recommended viewport box of the immersive media, and switches the viewpoint and the recommended viewport according to a manner of switching defined by the recommended viewport box. The presentation forms of the immersive media are more diversified, and the users' experience is improved.

Hereinafter a complete example is used to illustrate a solution of the present disclosure in detail.

First, a media production device constructs a recommended viewport box according to viewpoint information and recommended viewports corresponding to the viewpoints in an acquired media file A, and constructs a viewpoint entity-group box according to each entity that forms a part of the respective viewpoint. The media file A has two viewpoints, VPI1 and VPI2, between which VPI1 is an initial viewpoint. VPI1 corresponds to recommended viewports vp11, vp12 and vp13, among which vp11 is an initial viewport. VPI2 corresponds to the recommended viewport vp21 and vp22, between which vp21 is an initial viewport.

Information recorded in the recommended viewport box is as follows:
VPI1(independent_viewport=1; viewpoint_switch=1): vp11, vp12(des_viewpoint_id=2; des_viewport_id=21), vp13;
VPI2(independent_viewport=1; viewpoint_switch=1): vp21, vp22 (des_viewpoint_id=1; des_viewport_id=13).

The viewpoint entity-group box corresponding to each viewpoint is generated according to the constituent entities of such view point, i.e., each of VPI1 and VPI2. VPI1 has two entities "video" and "audio", and VPI2 has three entities "video", "audio" and "background video".

After the recommended viewport box has been constructed, the media production device encapsulates the recommended viewport box into an encapsulation file of the immersive media, and transmits the encapsulation file of the immersive media to a media consumption device. For example, the media production device may transmit the encapsulation file of the immersive media to the media consumption device in response to receiving a request from the media consumption device.

At the media consumption device side, a user may selects to enter a recommended browsing mode. Since VPI1 is the initial viewpoint, consumption starts from VPI1. A video track and an audio track are obtained according to the labels of the constituent entities of VPI1, and then rendered.

The recommended viewport vp11 is the initial viewport for VPI1, and hence is presented first. The recommended viewports in a recommended viewport track are rendered in sequence according to sample information of such track. When the recommended viewport vp12 is rendered, metadata information, e.g., (des_viewpoint_id=2; des_viewport_id=21), for the samples corresponding to vp12 are parsed, and it is learned that the presentation should jump to the viewpoint VPI2 and start consuming the recommended viewport vp21 after vp12 is consumed.

Hence, the media consumption device switches to the viewpoint VPI2 and the recommended viewport vp21, obtains a video track, an audio track, and a background video track according to the labels of the constituent entities of VPI2, and render theses tracks.

After consuming the recommended viewport vp21, the media consumption device renders each recommended viewport in sequence according to the sample information of the recommended viewport track. For example, after presenting the recommended viewport vp22, according to metadata information (e.g. (des_viewpoint_id=1; des_viewport_id=13)) in the sample of the recommended viewport vp22, the media consumption device jumps to the recommended viewport vp13 to continue consumption, after consuming the recommended viewport vp22.

Hence, embodiments of the present disclosure can achieve flexible and independent switching among viewpoints and viewports, thereby improving the users' experience.

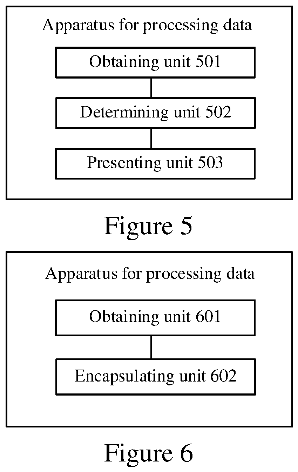

Hereinabove method embodiments of the present disclosure are described in conjunction with Figure 3 and Figure 4. In order to implement the foregoing solutions better, hereinafter apparatus embodiments of the present disclosure are described in conjunction with Figure 5 to Figure 8. The apparatus embodiments correspond to the method embodiments and may refer to the method embodiments for similar description, which is not repeated herein for brevity.

Reference is made to Figure 5, which is a schematic structural diagram of an apparatus for processing data of immersive media according to an embodiment of the present disclosure. The apparatus may be a computer program (including program codes) running in a media consumption device. For example, the apparatus may be application software in the media consumption device. As shown in Figure 5, the apparatus comprises an obtaining unit 501, a determining unit 502, and a presenting unit 503. The apparatus as shown in Figure 5 may be configured to execute a part or the whole of the method embodiment as described in Figure 3.

In some embodiments, the obtaining unit 501 is configured to obtain a recommended viewport box of an immersive media file, where the recommended viewport box is configured to define switching information of a viewpoint and switching information of a recommended viewport of the immersive media file.

The determining unit 502 is configured to determine a destination viewpoint and a destination recommended viewport indicated by the switching information of a current viewpoint and the switching information of a current recommended viewport.

The presenting unit 503 is configured to switch to the destination viewpoint and the destination recommended viewport when presenting the immersive media file.

In some embodiments, the recommended viewport box comprises a viewpoint switching field.

The determining unit 502 is further configured to determine according to the viewpoint switching field whether the current viewpoint needs to be switched to another viewpoint after the specific recommended viewport corresponding to the current viewpoint is presented, where the current viewpoint corresponds to at least one recommended viewport.

In case of positive determination, the determining unit 502 determines the destination viewpoint and the destination recommended viewport indicated by the switching information of the current viewpoint and the switching information of the current recommended viewport.

In some embodiments, the recommended viewport box comprises a destination viewpoint field, configured to signal the destination viewpoint to which the current viewpoint is switched after a current recommended viewport is presented, and a destination recommended viewport field, configured to signal the destination recommended viewport to which the current recommended viewport is switched after the current recommended viewport is presented and the current viewpoint is switched to the destination viewpoint.

The determining unit 502 is configured to determine the destination viewpoint according to the destination viewpoint field and determine the destination recommended viewport according to the destination recommended viewport field, where the destination viewpoint field represents the switching information of the current viewpoint, and the destination recommended viewport field represents the switching information of the current recommended viewport.

In some embodiments, the recommended viewport box comprises an independent viewport field, configured to indicate whether each viewpoint corresponds to a respective independent group of recommended viewports.

In some embodiments, the independent viewport field having a first value signals that each viewpoint corresponds to the respective independent group of recommended viewports.

The independent viewport field having a second value indicates that each viewpoint corresponds to a same group of recommended viewports.

In some embodiments, the recommended viewport box further comprises a viewpoint entity-group box, configured to record a label of each entity that forms a part of the viewpoint.

In some embodiments, the presenting unit 503 is further configured to render all entities of the destination viewpoint according to the labels of all entities of the destination viewpoint.

In some embodiments, the obtaining unit 501 is specifically configured to: obtain an encapsulation file of the immersive media file from the media production device; and decapsulate the encapsulation file of the immersive media file to obtain the recommended viewport box of the immersive media file.

In embodiments of the present disclosure, units of the apparatus as shown in Figure 5 may be partially or entirely integrated as one or more other units, or one or more of the units listed herein may be further divided into multiple units smaller in functions, which both can implement same operations while not affecting achieving technical effects of embodiments of the present disclosure. The foregoing units are divided based on logical functions. In practice, a function of one unit may be implemented by multiple units, or functions of multiple units are implemented by one unit. In other embodiments, the apparatus for processing data of immersive media may further comprise another other unit. In practice, each above functions may be cooperatively implemented with help of another unit or may be cooperatively implemented by multiple units. In another embodiment, a computer program (including program codes) that can perform the steps in the corresponding method as shown in Figure 3 may be executed on a general computing device, such as a computer, which comprises a processing element and a storage element, such as a central processing unit (CPU), a random access memory (RAM), and a read-only memory (ROM), so as to construct the apparatus as shown in Figure 5 and implement the method in embodiments of the present disclosure. The computer program may be recorded on, for example, a computer-readable recording medium, and may be loaded into the foregoing computing device by using the computer-readable recording medium and executed on the computing device.

Based on the same inventive concept, the apparatus according to embodiments of the present disclosure has a same principle for addressing problems and a same beneficial effect as the method according to embodiments of the present disclosure. Thus, reference may be made to the implementation principle and the beneficial effect of the method, which are not repeated herein for brevity.

Reference is made to Figure 6, which is a schematic structural diagram of an apparatus for processing data of immersive media according to another embodiment of the present disclosure. The apparatus may be a computer program (including program codes) running in the media production device. For example, the apparatus may be application software in the media production device. As shown in Figure 6, the apparatus comprises an obtaining unit 601 and an encapsulating unit 602. Hereinafter each unit is described.

The obtaining unit 601 is configured to obtain viewpoint information and viewport information for presenting an immersive media file.

The encapsulating unit 602 is configured to construct a recommended viewport box according to the viewpoint information and the viewport information, where the recommended viewport box is configured to define switching information of a viewpoint and switching information of a recommended viewport of the immersive media file.

In some embodiments, the recommended viewport box comprises a viewpoint switching field.

The viewpoint switching field is configured to indicate whether the current viewpoint is to be switched to another viewpoint after a specific recommended viewport corresponding to the current viewpoint is presented, where the current viewpoint corresponds to at least one recommended viewport.

In some embodiments, the recommended viewport box comprises a destination viewpoint field, configured to signal a destination viewpoint to which the current viewpoint is switched after a current recommended viewport is presented, and a destination recommended viewport field, configured to signal a destination recommended viewport to which the current recommended viewport is switched after the current recommended viewport is presented and the current viewpoint is switched to the destination viewpoint.

In some embodiments, the recommended viewport box comprises an independent viewport field, configured to indicate whether each viewpoint corresponds to a respective independent group of recommended viewports.

In some embodiments, the independent viewport field having a first value signals that each viewpoint corresponds to the respective independent group of recommended viewports.

The independent viewport field having a second value indicates that each viewpoint corresponds to a same group of recommended viewports.

In some embodiments, the recommended viewport box further comprises a viewpoint entity-group box, configured to record a label of each entity that forms a part of a viewpoint.

In some embodiments, the encapsulating unit 602 is further configured to encapsulate the recommended viewport box into an encapsulation file of the immersive media file.

The apparatus further comprises a transmission unit, configured to transmit the encapsulation file of the immersive media file to a media playback device.

In embodiments of the present disclosure, units of the apparatus as shown in Figure 6 may be partially or entirely integrated as one or more other units, or one or more of the units listed herein may be further divided into multiple units smaller in functions, which both can implement same operations while not affecting achieving technical effects of embodiments of the present disclosure. The foregoing units are divided based on logical functions. In practice, a function of one unit may be implemented by multiple units, or functions of multiple units are implemented by one unit. In other embodiments, the apparatus for processing data of immersive media may further comprise another other unit. In practice, each above functions may be cooperatively implemented with help of another unit or may be cooperatively implemented by multiple units. In another embodiment, a computer program (including program codes) that can perform the steps in the corresponding method as shown in Figure 4 may be executed on a general computing device, such as a computer, which comprises a processing element and a storage element, such as a central processing unit (CPU), a random access memory (RAM), and a read-only memory (ROM), so as to construct the apparatus as shown in Figure 6 and implement the method in embodiments of the present disclosure. The computer program may be recorded on, for example, a computer-readable recording medium, and may be loaded into the foregoing computing device by using the computer-readable recording medium and executed on the computing device.

Based on the same inventive concept, the apparatus according to embodiments of the present disclosure has a same principle for addressing problems and a same beneficial effect as the method according to embodiments of the present disclosure. Thus, reference may be made to the implementation principle and the beneficial effect of the method, which are not repeated herein for brevity.

A computer device is further provided according to an embodiment of the present disclosure. The computer device may be a media production device or a media playback device. Hereinafter the media production device and the media playback device are described respectively.

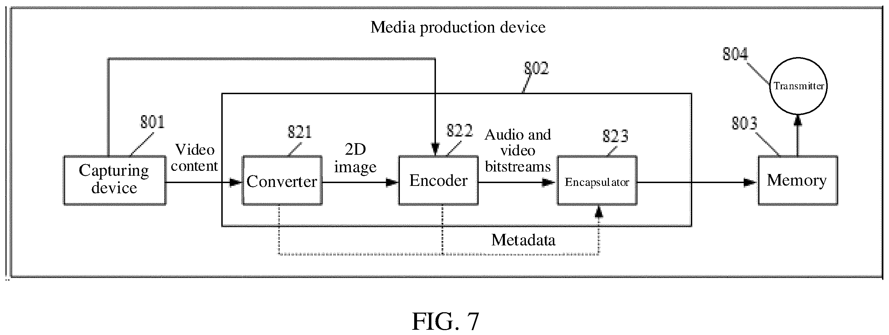

Figure 7 shows a schematic structural diagram of a media production device according to an embodiment of the present disclosure. The media production device may refer to a computer device used by a provider of immersive media, and the computer device may be a terminal (e.g., a PC, a smart mobile device such as a smartphone) or a server. As shown in Figure 7, the media production device comprises a capturing device 801, a processor 802, a memory 803, and a transmitter 804.

The capturing device 801 is configured to capture realistic visual-acoustic scenes to obtain raw data (comprising audio content and video content which are synchronous both temporally and spatially) of the immersive media. The capturing device 801 may include, but is not limited to, an audio device, a camera device, and a sensing device. The audio device may include an audio sensor, a microphone, or the like. The camera device may include an ordinary camera, a stereo camera, a light field camera, or the like. The sensing device may include a laser device, a radar device, or the like.

The processor 802, also called a central processing unit (CPU), is a processing core of the media production device. The processor 802 is suitable for one or more program instructions, specifically suitable for loading and executing the one or more program instructions, to perform a process of the method for processing data of immersive media as shown in Figure 4.

The memory 803 is a storage apparatus in the media production device, and is configured to store a program and a media resource. Herein the memory 803 may include an internal storage medium of the media production device or an extended storage medium supported by the media production device. The memory 803 may be a high-speed RAM, or may be a non-volatile memory, for example, at least one magnetic disk memory. Optionally, the memory may be at least one memory far away from the foregoing processor. The memory 803 provides a storage space, which is configured to store an operating system of the media production device. The storage space is further configured to store a computer program comprising program instructions. The program instructions can be invoked and executed by a processor to perform each step of the method for processing data of immersive media. In addition, the memory 803 may be further configured to store the immersive media file generated through processing of the processor. The immersive media file comprises a media file resource and MPD information.

The transmitter 804 is configured to implement transmission interaction between the media production device and another device, and specifically configured to implement transmission of the immersive media between the media production device and the media playback device. That is, the media production device transmits the relevant media resource of the immersive media to the media playback device via the transmitter 804.

Reference is further made to Figure 7. The processor 802 may include a converter 821, an encoder 822, and an encapsulator 823.

The converter 821 is configured to perform a series of conversion processing on the captured video content, so as to convert the video content into content that is suitable for video encoding of the immersive media. The conversion processing may include splicing and projection. Optionally, the conversion processing further includes regional encapsulation. The converter 821 may convert the captured 3D video content into a 2D image, and provide the 2D image to the encoder for video encoding.

The encoder 822 is configured to perform audio encoding on the captured audio content to obtain an audio bitstream of the immersive media, and perform video encoding on the 2D image obtained through conversion of the converter 821 to obtain a video bitstream.

The encapsulator 823 is configured to encapsulate the audio bitstream and the video bitstream in a file container according to a file format (such as ISOBMFF) of the immersive media, so as to generate the media file resource of the immersive media. The media file resource is a media file of the immersive media or media segments forming the media file. The encapsulator 823 is further configured to record the metadata of the media file resource of the immersive media by using the MPD information according to a requirement of the file format of the immersive media. The encapsulation file of the immersive media obtained through processing of the encapsulator is stored in the memory, and provided to the media playback device based on a request for presenting the immersive media.

In an embodiment, the processor 802 (specifically, each component in the processor) performs each step of the method for processing data of immersive media as shown in Figure 4 by invoking the one or more instructions in the memory 803. Specifically, the memory 803 stores one or more first instructions, and the one or more first instructions can be loaded by the processor 802 to perform following operations.

Viewpoint information and viewport information of an immersive media file are acquired.

A recommended viewport box is constructed according to the viewpoint information and the viewport information of the immersive media file, where the recommended viewport box is configured to define switching information of a viewpoint and switching information of a recommended viewport of the immersive media file.

In an embodiment, the processor 802 when executing the executable program codes in the memory 803 further performs following operations. The recommended viewport box is encapsulated into an encapsulation file of the immersive media file, and the encapsulation file of the immersive media file is transmitted to the media playback device.

Based on the same inventive concept, the computer device according to embodiments of the present disclosure has a same principle for addressing problems and a same beneficial effect as the method according to embodiments of the present disclosure. Thus, reference may be made to the implementation principle and the beneficial effect of the method, which are not repeated herein for brevity.

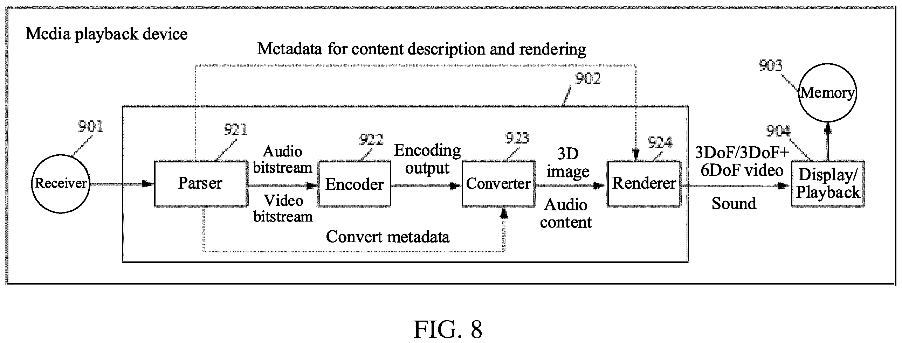

Figure 8 shows a schematic structural diagram of a media playback device according to an embodiment of the present disclosure. The media playback device may refer to a computer device used by a user of the immersive media. The computer device may be a terminal (e.g., a PC, a smart mobile device such as a smart phone, and a VR device such as a VR helmet and VR glasses). As shown in Figure 8, the media playback device comprises a receiver 901, a processor 902, a memory 903, and a display/playback apparatus 904.

The receiver 901 is configured to implement transmission interaction between the decoding side and another device, and specifically configured to implement transmission of the immersive media between the media production device and the media playback device. That is, the media playback device receives the relevant media resource of the immersive media from the media production device via the receiver 901.

The processor 902, also called a central processing unit (CPU), is a processing core of the media production device. The processor 902 is suitable for one or more program instructions, specifically suitable for loading and executing the one or more program instructions, to perform a process of the method for processing data of immersive media as shown in Figure 3.

The memory 903 is a storage apparatus in the media production device, and is configured to store a program and a media resource. Herein the memory 903 may include an internal storage medium of the media production device or an extended storage medium supported by the media production device. The memory 903 may be a high-speed RAM, or may be a non-volatile memory, for example, at least one magnetic disk memory. Optionally, the memory may be at least one memory far away from the foregoing processor. The memory 903 provides a storage space, which is configured to store an operating system of the media production device. The storage space is further configured to store a computer program comprising program instructions. The program instructions can be invoked and executed by a processor to perform each step of the method for processing data of immersive media. In addition, the memory 903 may be further configured to store a 3D image, audio content corresponding to the 3D image, and information required for rendering the audio content, which are generated through processing of the processor.

The display/playback apparatus 904 is configured to output a sound and the 3D image obtained through the rendering.

Reference is made to Figure 8 again. The processor 902 may comprise a parser 921, a decoder 922, a converter 923, and a renderer 924.

The parser 921 is configured to perform file decapsulation on an encapsulation file of immersive media from the media production device, specifically configured to decapsulate a media file resource according to a requirement of a file format of the immersive media, so as to obtain an audio bitstream and a video bitstream. The parser 921 is further configured to provide the audio bitstream and the video bitstream to the decoder 922.

The decoder 922 performs audio decoding on the audio bitstream to obtain audio content, and provides the audio content to the renderer for audio rendering. In addition, the decoder 922 decodes the video bitstream to obtain a 2D image. According to the metadata provided in the MPD information, the 2D image is an encapsulated image in a case that the metadata indicates that the immersive media has been subject to regional encapsulation, and the 2D image refers to a projection image in a case that the metadata indicates that the immersive media has not been subject to the regional encapsulation.

The converter 923 is configured to convert the 2D image into a 3D image. In a case that the immersive media has been subject to the regional encapsulation, the converter 923 first performs regional decapsulation on the encapsulation image to obtain the projection image, and then performs reconstruction on the projection image to obtain the 3D image. In a case that the rendering media has not been subject to the regional encapsulation, the converter 923 performs reconstruction directly on the projection image to obtain the 3D image.

The renderer 924 is configured to render the audio content and the 3D image of the immersive media, and specifically configured to render the audio content and the 3D image according to the metadata, which is related to the rendering and the viewport, in the MPD information. The display/playback apparatus is configured to output the rendered audio content and the rendered 3D image.

In an embodiment, the processor 902 (specifically, each component in the processor) performs each step in the method for processing data of immersive media as shown in Figure 3 by invoking the one or more instructions in the memory 803. Specifically, the memory 903 stores one or more second instructions, and the one or more second instructions can be loaded by the processor 902 to perform following operations.

A recommended viewport box of an immersive media file is obtained, where the recommended viewport box is configured to define switching information of a viewpoint and switching information of a recommended viewport of the immersive media file.

A destination viewpoint and a destination recommended viewport are determined according to the switching information of a current viewpoint and the switching information of a current recommended viewport.

The current viewpoint and the current recommended viewport are switched to the destination viewpoint and the destination recommended viewport, respectively, when presenting the immersive media file.

In an embodiment, the processor 902 when executing the executable program codes in the memory 903 further performs following operations. An encapsulation file of the immersive media file is obtained from a media production device, and the encapsulation file of the immersive media file is decapsulated to obtain the recommended viewport box of the immersive media file.

Based on the same inventive concept, the computer device according to embodiments of the present disclosure has a same principle for addressing problems and a same beneficial effect as the method according to embodiments of the present disclosure. Thus, reference may be made to the implementation principle and the beneficial effect of the method, which are not repeated herein for brevity.

A computer-readable storage medium is further provided according to an embodiment of the present disclosure. The computer-readable storage medium stores a computer program, and the computer program is loadable and executable by a processor to perform the foregoing method embodiments.

A computer program product or a computer program is provided according to an embodiment of the present disclosure. The computer program product or the computer program comprises computer instructions, and the computer instructions are stored in a computer-readable storage medium. A processor of a computer device reads the computer instructions from the computer-readable storage medium, and executes the computer instructions to cause the computer device to perform the foregoing method embodiments.

The foregoing method embodiments are described as a combination of a series of actions for brevity. Those skilled in the art can appreciate that the present disclosure is not limited to the described order of the actions, because some steps may be performed in another other order or simultaneously according to embodiments of the present disclosure. In addition, those skilled in the art can further understand that embodiments described here are preferable embodiments, and an actions or a module involved in these embodiments may not be necessarily when implementing the present disclosure.

According to a practical requirement, a sequence of steps in the method embodiments of the present disclosure may be adjusted, certain steps may be combined, and a certain step may be removed.

According to a practical requirement, modules in the method embodiments of the present disclosure may be combined, and a certain module may be divided, removed, or added.

Those skilled in the art may understand that all or some of the steps of the various methods in the foregoing embodiments may be implemented by a program instructing relevant hardware. The program may be stored in a computer-readable storage medium. The readable storage medium may include: a flash drive, a Read-Only Memory (ROM), a Random Access Memory (RAM), a magnetic disk, an optical disc, and the like.

Herein the processor may be an integrated circuit chip having a capability of processing signals. During implementation, steps of the foregoing method embodiments may be implemented through a hardware integrated logic circuit in the processor or through instructions in a software form.

What are disclosed above are merely examples of embodiments of the present disclosure, and are not intended for limiting the protection scope of the present disclosure. Therefore, equivalent variations made in accordance with the claims of the present disclosure shall fall within the scope of the present disclosure.

## Claims

1. A method for processing data of immersive media, executable by a media playback device wherein the method comprises:
obtaining a recommended viewport box of an immersive media file, wherein the recommended viewport box is configured to define switching information of a viewpoint and switching information of a recommended viewport of the immersive media file;
determining a destination viewpoint and a destination recommended viewport indicated by the switching information of a current viewpoint and the switching information of a current recommended viewport; and
switching to the destination viewpoint and the destination recommended viewport when presenting the immersive media file.

2. The method according to claim 1, wherein the recommended viewport box comprises a viewpoint switching field, and the method further comprises:
determining, according to the viewpoint switching field, whether the current viewpoint needs to be switched to another viewpoint after a specific recommended viewport corresponding to the current viewpoint is presented, wherein the current viewpoint corresponds to at least one recommended viewport;
wherein determining the destination viewpoint and the destination recommended viewport indicated by the switching information of the current viewpoint and the switching information of the current recommended viewport is performed in response to determining that the current viewpoint needs to be switched to another viewpoint after the specific recommended viewport corresponding to the current viewpoint is presented.

3. The method according to claim 1 or 2, wherein:
the recommended viewport box comprises:
a destination viewpoint field, configured to signal the destination viewpoint, to which the current viewpoint is switched after a current recommended viewport is presented, and
a destination recommended viewport field, configured to signal the destination recommended viewport, to which the current recommended viewport is switched after the current recommended viewport is presented and the current viewpoint is switched to the destination viewpoint;
determining the destination viewpoint and the destination recommended viewport indicated by the switching information of the current viewpoint and the switching information of the current recommended viewport comprises:
determining the destination viewpoint according to the destination viewpoint field; and
determining the destination recommended viewport according to the destination recommended viewport field;
wherein the destination viewpoint field represents the switching information of the current viewpoint, and the destination recommended viewport field represents the switching information of the current recommended viewport.

4. The method according to claim 1 or 2, wherein the recommended viewport box comprises:
an independent viewport field, configured to indicate whether each viewpoint corresponds to a respective independent group of recommended viewports.

5. The method according to claim 4, wherein:
the independent viewport field having a first value signals that each viewpoint corresponds to the respective independent group of recommended viewports; and
the independent viewport field having a second value indicates that each viewpoint corresponds to a same group of recommended viewports.

6. The method according to claim 1 or 2, wherein the recommended viewport box further comprises:
a viewpoint entity-group box, configured to record a label of each entity that forms a part of the viewpoint.

7. The method according to claim 6, further comprising:
rendering all entities of the destination viewpoint according to the labels of all entities of the destination viewpoint.

8. The method according to claim 1, wherein obtaining the recommended viewport box of the immersive media file comprises:
obtaining an encapsulation file of the immersive media file from the media production device; and
decapsulating the encapsulation file of the immersive media file to obtain the recommended viewport box of the immersive media file.

9. A method for processing data of immersive media, executable by a media production device, and comprises:
obtaining viewpoint information and viewport information for presenting an immersive media file; and
constructing a recommended viewport box according to the viewpoint information and the viewport information, wherein the recommended viewport box is configured to define switching information of a viewpoint and switching information of a recommended viewport of the immersive media file.

10. The method according to claim 9, wherein the recommended viewport box comprises:
a viewpoint switching field, configured to indicate whether the current viewpoint is to be switched to another viewpoint after a specific recommended viewport corresponding to the current viewpoint is presented, wherein the current viewpoint corresponds to at least one recommended viewport.

11. The method according to claim 9 or 10, wherein the recommended viewport box comprises:
a destination viewpoint field, configured to signal a destination viewpoint, to which the current viewpoint is switched after a current recommended viewport is presented, and
a destination recommended viewport field, configured to signal a destination recommended viewport, to which the current recommended viewport is switched after the current recommended viewport is presented and the current viewpoint is switched to the destination viewpoint.

12. The method according to claim 9 or 10, wherein the recommended viewport box comprises:
an independent viewport field, configured to indicate whether each viewpoint corresponds to a respective independent group of recommended viewports.

13. An apparatus for processing data of immersive media, deployable in a media playback device, wherein the apparatus comprises:
an obtaining unit, configured to obtain a recommended viewport box of an immersive media file, wherein the recommended viewport box is configured to define switching information of a viewpoint and switching information of a recommended viewport of the immersive media file;
a determining unit, configured to determine a destination viewpoint and a destination recommended viewport indicated by the switching information of a current viewpoint and the switching information of a current recommended viewport; and
a presenting unit, configured to switch to the destination viewpoint and the destination recommended viewport when presenting the immersive media file.

14. An apparatus for processing data of immersive media, deployable in a media production device, wherein the apparatus comprises:
an obtaining unit, configured to obtain viewpoint information and viewport information for presenting an immersive media file; and
a encapsulating unit, configured to construct a recommended viewport box according to the viewpoint information and the viewport information, wherein the recommended viewport box is configured to define switching information of a viewpoint and switching information of a recommended viewport of the immersive media file.

15. A computer device, comprising:
a processor, configured to execute a computer program; and
a computer-readable storage medium, storing the computer program;
wherein the computer program when executed by the processor implements the method according to any one of claims 1 to 8, or the method according to any one of claims 9 to 12.

16. A computer-readable storage medium, configured to store a computer program, wherein the computer program is configured to cause a computer to perform the method according to any one of claims 1 to 8, or the method according to any one of claims 9 to 12.

17. A computer program product, wherein the computer program product when executed is configured to implement the method according to any one of claims 1 to 8, or the method according to any one of claims 9 to 12.
